# EUROPÄISCHE PATENTSCHRIFT

(11) **EP 0 394 860 B1**
(45) Veröffentlichungstag und Bekanntmachung des Hinweises auf die Patenterteilung: **12.01.1994**
(21) Anmeldenummer: 90107504.4
(22) Anmeldetag: 20.04.1990
(51) Int. Cl.: F15B 13/04, F16K 11/07

(54) **Hydraulikventil**
Hydraulic valve
Distributeur hydraulique

(30) Priorität: 24.04.1989 US 342845
(43) Veröffentlichungstag der Anmeldung: 31.10.1990
(73) Patentinhaber: DEERE & COMPANY, Moline, Illinois 61265 (US)
(72) Erfinder: Kugler, Uwe Herbert, Cedar Falls, Iowa 50613 (US)
(74) Vertreter: Feldmann, Bernhard

(56) Entgegenhaltungen:
- GB-A- 1 227 539
- US-A- 3 132 668
- US-A- 3 153 949
- US-A- 3 247 768
- US-A- 3 866 880
- US-A- 4 265 144

## Beschreibung

Die Erfindung betrifft ein Hydraulikventil gemäß dem Oberbegriff des Patentanspruches 1 oder 2.

Es sind Steuerventile bekannt, durch die sich entfernt liegende hydraulische Betätigungsvorrichtungen steuern lassen. Bei einigen Anwendungen, wie beispielsweise bei der Steuerung des Hydraulikzylinders eines Frontladers, wird ein Steuerventil ohne Rastfunktion verwendet. Andere Anwendungen, wie beispielsweise die Steuerung des Flüssigkeitsstromes zu einem Hydraulikmotor, erfordern ein Steuerventil, welches in bestimmten Lagen arretierbar ist. Eine weitere Anwendung, wie beispielsweise die Steuerung eines Flüssigkeitsstromes zu bestimmten Hydraulikzylindern, erfordert ein Ventil mit einer Rastfunktion, bei der die Rastung automatisch "herausgestoßen" wird, wenn der Zylinder seine Endstellung erreicht. Bisher erforderten diese verschiedenen Anwendungen verschiedene Steuerventile. Es ist wünschenswert, lediglich ein Ventil zu haben, das wahlweise für verschiedene Rastarbeitsweisen verwendbar ist.

Aus der GB-A-1 227 539 ist ein hydraulisches Schieberventil mit einer Rasteinrichtung für zwei Rasteinstellungen bekannt. Hierfür enthält der Schieber an einem seiner Enden eine axiale Ausdrehung mit mehreren, sich axial erstreckenden, je eine Kugel aufnehmenden Bohrungen. Die Kugeln werden durch die entsprechend ausgebildete Kurvenfläche eines federbelasteten, in der Ausdrehung geführten Druckstempels radial nach außen gedrängt. Das Schieberende ist durch eine hohle, verdrehbare Buchse umgeben, deren Innenfläche zwei zueinander beabstandete Ringnuten aufweist. Die Lage der Ringnuten ist derart gewählt, daß bei Erreichen einer der zwei Rastlagen des Schiebers die Kugeln von einer der Ringnuten teilweise aufgenommen werden und eine Relativverschiebung zwischen der sich am Gehäuse abstützenden Buchse und dem Schieber verhindern. Durch zwei axial ausgerichtete, sich auf dem Umfang gegenüberliegende Längsnuten sind die beiden Ringnuten miteinander verbunden. Die erste Lage der Rasteinrichtung, bei der der Schieber axial durch eine Zentrierfeder verschiebbar ist, ergibt sich, wenn die Kugeln in die Längsnuten eingreifen. Durch Verdrehung der Buchse um 90° ist die zweite Lage einstellbar, in der der Schieber in einer der Rastlagen festgehalten wird. Die verdrehbare Buchse ragt aus dem Ventilgehäuse heraus und enthält hier ein kantiges Ende, das der Verdrehung und Drehverriegelung dient. Diese bekannte Rasteinrichtung ist in ihrer Anwendung auf die mechanische Einstellung einer Verrastungsstellung und einer rastfreien Stellung des Schiebers beschränkt und erfüllt damit nicht alle gewünschten Anforderungen.

Aus der US-A-3,132,668 geht ein Hydrauliksteuerventil mit einer Rasteinrichtung hervor, bei der der Schieber an einem seiner Enden eine axiale Ausdrehung aufweist, in die ein am Ventilgehäuse befestigter Zylinder eingreift, der seinerseits einen federbelasteten Verriegelungskolben aufnimmt. Eine konische Fläche des Verriegelungskolbens treibt Kugeln, die von Radialbohrungen des Zylinders aufgenommen werden, radial nach außen in Ringnuten in der Schieberausdrehung. Die Ringnuten definieren die Verriegelungsstellungen des Schiebers. Der Verriegelungskolben wird durch ein Überdruckventil gesteuert und verschiebt sich bei Druckbeaufschlagung gegen die Kraft einer Feder, so daß die Kugeln radial nach innen ausweichen können und die Verriegelungsstellungen des Schiebers aufgehoben sind. Das Überdruckventil wird durch den Druck eines zu betätigenden Hydraulikzylinders derart beaufschlagt, daß bei Überschreiten eines bestimmten Zylinderdruckes der Verriegelungskolben automatisch aus seiner Verriegelungsstellung in seine Entriegelungslage verschoben wird, in der der Schieber seine neutrale Lage einnimmt. Eine Umschaltung zwischen einer ständigen Verrastung und einer rastfreien Lage kann durch eine Bedienungsperson nicht vorgenommen werden.

Die mit der Erfindung zu lösende Aufgabe wird darin gesehen, ein Steuerventil mit einem Rastmechanismus gemäß dem Oberbegriff des Patentanspruches 1 oder 2 weiter zu entwickeln, dessen Rastfunktionen wahlweise z. B. durch eine Bedienungsperson abänderbar sind. Eine weitere Aufgabe liegt darin, daß die Änderung der Rastfunktion ohne Zuhilfenahme von Spezialwerkzeugen vorgenommen werden kann. Eine weitere Aufgabe wird darin gesehen, daß das Steuerventil wahlweise in einen Nichtarretierzustand und einen anhaltenden Rastzustand einstellbar ist. Einer weiten Aufgabe zufolge soll das Steuerventil wahlweise in einen Rastzustand einstellbar sein, aus dem ein Herausstoßen möglich ist.

Die Aufgabe wird bei einem gattungsgemäßen Hydraulikventil durch die kennzeichnenden Merkmale des Patentanspruches 1 oder 2 gelöst. Weitere vorteilhafte Ausgestaltungen und Weiterbildungen der Erfindung gehen aus den Unteransprüchen hervor.

Es ist von Vorteil, einen Rastmechanismus zu verwenden, bei dem der Steuerschieber einen druckbetätigbaren Rastkolben aufnimmt. Der Rastkolben trägt eine Nut zur Aufnahme von Rastkugeln und hat eine kegelstumpfförmige Oberfläche. Die kegelstumpfförmige Oberfläche kann dabei mit den Rastkugeln in Eingriff treten, um diese nach außen zu drücken, wobei sie durch zueinander beabstandete Rastnuten in einer äußeren Hülse aufgenommen werden. Durch ein von einer Bedienungsperson betätigbares Raststeuerventil läßt sich der Druck steuern, welcher auf den Rastkolben wirkt, wodurch ein Drucksteuerungsbetrieb, eine Betriebsart, in der eine Bedienungsperson die Rastung wählen kann, oder eine Nichtarretierbetriebsweise einstellbar ist.

Gemäß einer bevorzugten Ausgestaltung der Erfindung enthält das Raststeuerventil ein federvorgespanntes Sitzventil und einen lastdruckempfindlichen Rastfreigabekolben. Die Federvorspannung ist von einer Bedienungsperson einstellbar, wodurch sich verschiedene Steuerarten des Hauptsteuerschiebers einstellen lassen. So kann die Bedienungsperson eine ständige Verrastung, einen Rastmodus mit einer lastdruckempfindlichen Verrastung, bei der in Abhängigkeit des Lastdruckes ein Herausdrücken des Hauptsteuerschiebers aus einer Rastposition möglich ist, und ein Nichtarretiermodus, bei dem die Raststellungen aufgehoben sind, einstellen.

Weitere vorteilhafte Ausgestaltungen und Weiterbildungen der Erfindung gehen aus den Unteransprüchen hervor.

Anhand der Zeichnung, die mehrere Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: den Querschnitt eines Steuerventiles mit einem durch eine Bedienungsperson wählbaren Rastmechanismus gemäß der Erfindung,
- Fig. 2: eine vergrößerte Darstellung eines Bereiches aus der Fig. 1 und
- Fig. 3: eine vergrößerte Darstellung ähnlich wie Fig. 2, jedoch von einer anderen Ausgestaltung der Erfindung.

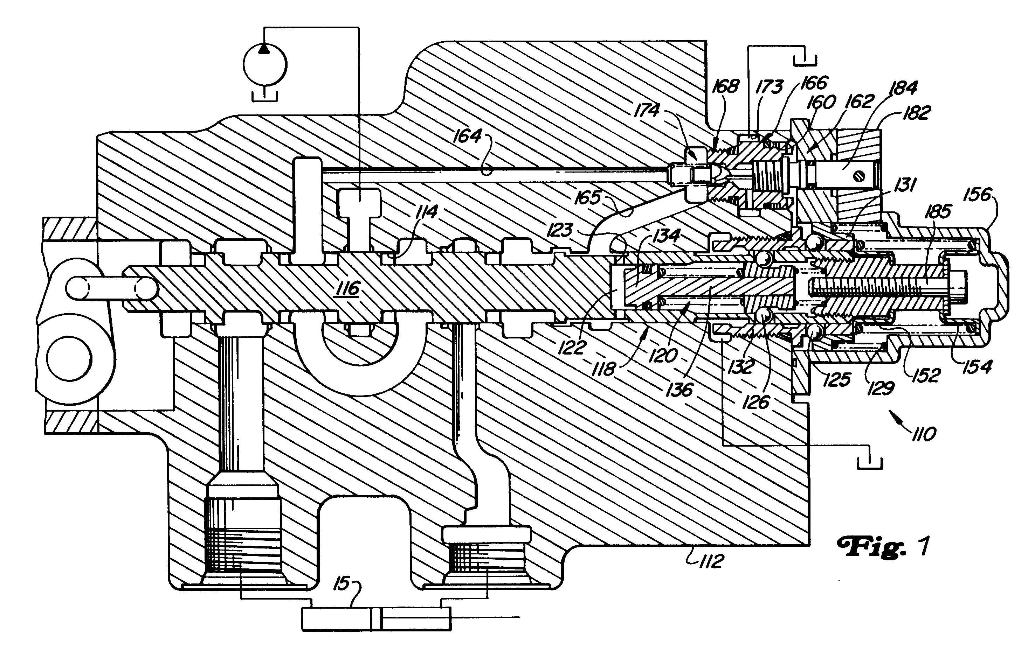

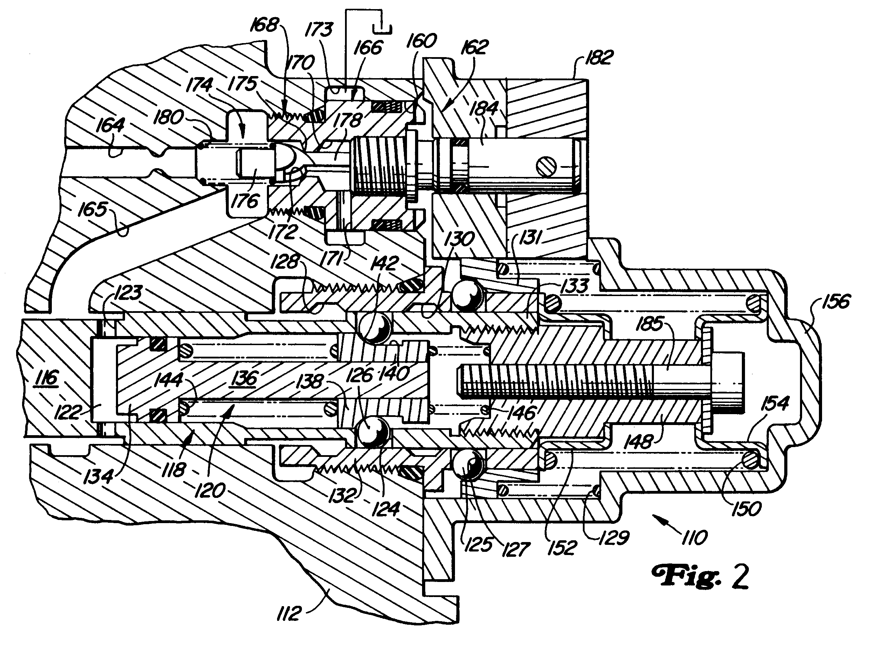

Das in den Figuren 1 und 2 dargestellte Steuerventil 110 besteht aus einem Ventilgehäuse 112, in dem sich eine Hauptventilbohrung 114 erstreckt, die einen Hauptsteuerschieber 116 gleitbar in sich aufnimmt. Ein hohles Ende 118 des Steuerschiebers 116 nimmt einen Rastkolben 120 auf und bildet mit diesem eine Raststeuerkammer 122. Mehrere radiale Öffnungen 124 nehmen Rastkugeln 126 auf, die in Rastvertiefungen 128 und 130 in einer Rasthülse 132 eingreifen können. Ein weiterer Satz von Rastkugeln 125 wird durch Öffnungen 127 der Rasthülse 132 aufgenommen. Diese Rastkugeln 125 sind durch eine Feder 129 und ein Federgleitstück 131 vorbelastet, um an dem Ansatz 133 anzugreifen, wodurch der Hauptventilschieber 116 in einer Schwimmstellung lösbar gehalten wird. Die Raststeuerkammer 122 steht über radiale Durchgänge 123 mit der Bohrung 114 in Verbindung.

Der Rastkolben 120 enthält ein Kolbenteil 134, der einen Dorn 136 trägt, auf dem ein gleitbarer Anschlag 138 aufgesetzt ist. Der Anschlag 138 weist eine ringförmig umlaufende äußere Vertiefung 140 auf, deren eine Seitenkante in etwa als kegelstumpfförmige Fläche 142 ausgebildet ist. Eine Feder 144 ist zwischen dem Kolbenteil 134 und dem Anschlag 138 eingespannt. Eine weitere Feder 146 ist zwischen dem Anschlag 138 und einem Kappenteil 148 eingespannt. Das Kappenteil 148 ist in das hohle Ende 118 des Hauptsteuerschiebers 116 eingeschraubt. Das Kappenteil 148 steht mit einer Ventilzentrierfeder 150 über Federführungen 152 und 154 in Verbindung und wird mit diesen von einer Abdeckkappe 156 umgeben.

Eine zweite Ventilbohrung 160 erstreckt sich in das Ventilgehäuse 112 und nimmt eine Rastventilanordnung 162 auf. Das innere Ende der Bohrung 160 steht mit dem Lastdruck über einen Kanal 164 und mit der Steuerkammer 122 über einen Kanal 165 und die Durchgänge 123 in Verbindung. Die Rastventilanordnung 162 enthält eine Rastventilhülse 166, welche dichtend von einem erweiterten Bereich der Bohrung 160 aufgenommen und durch eine Schraubverbindung bei 168 festgehalten wird. Eine Ventilbohrung 170 erstreckt sich axial durch die Rastventilhülse 166 und weist einen Bereich mit verringertem Durchmesser auf, wodurch ein Ventilkegelsitz 172 gebildet wird. Durch die radiale Öffnung 171 wird die Bohrung 170 mit einer Vertiefung 173 verbunden, welche über einen nicht dargestellten Kanal mit einem nicht dargestellten Sammelbehälter verbunden ist. Ein Kegelventilteil 174 wird durch die Bohrung 170 aufgenommen und weist einen konischen Sitzbereich 175, der dichtend mit dem Sitz 172 zur Anlage gebracht werden kann, einen Anschlag 176 und einen Schaft 178 auf. Eine Feder 180 ist derart vorgespannt, daß sie das Kegelventilteil 174 in Eingriff mit dem Sitz 172 treibt. Ein ähnliches Kegelventilteil ist durch die US-C- 4,303,098 beschrieben, auf die hiermit hinsichtlich deren Offenbarung Bezug genommen wird.

Ein durch eine Bedienungsperson betätigbarer Bedienungsknopf 182 ist an einer Welle 184 befestigt, welche in die Rastventilhülse 166 eingeschraubt ist und deren Ende den Schaft 178 des Kegelventilteils 174 aufnimmt. Gemäß der in Fig. 2 dargestellten Lage hält die Welle 184 das Kegelventilteil 174 etwas von dem Sitz 172 entfernt, so daß die Raststeuerkammer 122 mit dem Vorratsbehälter über den Durchgang 123, den Kanal 165, die Bohrung 170 und die Vertiefung 173 verbunden ist. Herrscht in der Raststeuerkammer 122 der Druck des Vorratsbehälters, so befindet sich der Rastkolben 120 in einer Lage, die es den Rastkugeln 126 erlaubt, sich radial in die Vertiefung 140 zurückzuziehen, so daß sich der Hauptsteuerschieber 116 ohne Rastfunktion verschieben läßt. Wird der Bedienungsknopf 182 entgegen dem Uhrzeigersinn verdreht, so wird die Welle 184 von der Bohrung 170 zurückgezogen. Dies ermöglicht es, daß das Kegelventilteil 174 gegen den Sitz 172 zur Anlage kommt und die Verbindung zwischen der Raststeuerkammer 122 und dem Vorratsbehälter unterbrochen wird. Nun teilt sich der Lastdruck über die Kanäle 164, 165 und die Durchgänge 123 der Raststeuerkammer 122 mit, wodurch der Rastkolben 120 gemäß Fig. 2 nach rechts gedrängt wird. Die kegelstumpfförmige Fläche 142 drängt die Rastkugeln 126 radial nach außen, so daß dann, wenn der Hauptsteuerschieber 116 nach rechts oder links verschoben wird, die Rastkugeln 126 in die Vertiefungen 128 oder 130 eintreten und den Hauptsteuerschieber 116 in seiner verschobenen Lage festhalten. Das Ende einer Schraube 185 steht so weit vor, daß es an dem Rastkolben 120 anstößt, bevor die Feder 144 vollständig zusammengedrückt ist. Dies ermöglicht es einer Bedienungsperson, den Hauptventilschieber 116 jederzeit aus seiner Rastlage herauszuziehen. Wie bei der vorhergehenden Ausführungsform ist Hydraulikdruck erforderlich, damit der Anschlag 138 die Rastkugeln 126 nach außen drängt und den Hauptsteuerschieber in einer Raststellung festhält. Fällt der Pumpendruck ab, so sinkt auch der Druck in der Raststeuerkammer 122, was es dem Anschlag 138 erlaubt, sich nach links zu bewegen, wodurch der Hauptsteuerschieber 116 aus seiner Rastung befreit und es ihm ermöglicht wird, automatisch in eine neutrale Lage zurückzukehren.

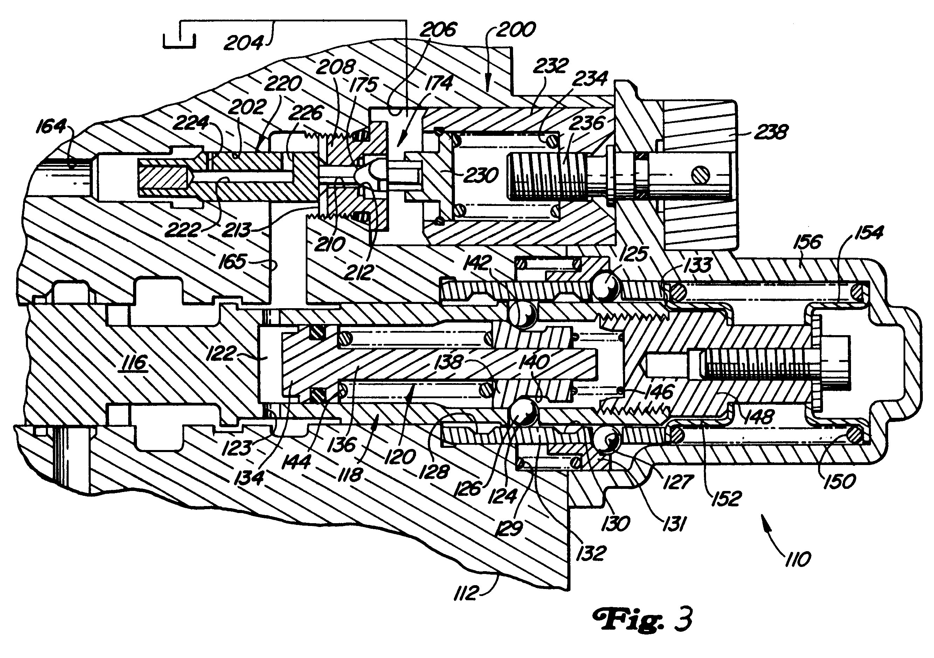

Eine andere alternative Ausführungsform der Erfindung geht aus Fig. 3 hervor. Einige Teile dieser Ausführungsform sind denen der Ausführungsform gemäß Fig. 1 und 2 ähnlich, so daß sie mit den gleichen Bezugszeichen belegt wurden. Die Ausführungsform gemäß Fig. 3 unterscheidet sich von der gemäß Fig. 1 und 2 hinsichtlich des Raststeuerventils 200. Eine Ventilbohrung 202 erstreckt sich in das Ventilgehäuse 112 und steht mit den Kanälen 164 und 165 in Verbindung. Eine Leitung 204 verbindet einen Bereich 206 größeren Durchmessers der Ventilbohrung 202 mit einem Vorratsbehälter.

Ein Ventilsitzteil 208 ist durch eine Verschraubung in der Bohrung 202 zwischen dem Kanal 165 und dem Bereich 206 größeren Durchmessers festgelegt. Durch das Ventilsitzteil 208 erstreckt sich eine zentrale Bohrung 210 und bildet einen Ventilsitz 212. Mehrere Vorsprünge oder rückgratähnliche Erhebungen 213 erstrecken sich axial und radial von dem Ende des Ventilsitzteiles 208 weg, welches dem Kanal 164 zugewandt und dem Flüssigkeitsdruck in dem Kanal 165 ausgesetzt ist. Ein Kegelventilteil 174 (identisch mit dem in Fig. 2 dargestellten) wird teilweise von der Bohrung 210 aufgenommen. Der Sitz 175 des Kegelventilteils 174 kann mit dem Ventilsitz 212 dichtend in Eingriff treten.

Ein herausstoßbarer Schieber 220 wird gleitbar und dichtend von der Bohrung 202 in deren Bereich zwischen dem Kanal 164 und dem Ventilsitzteil 208 aufgenommen. Eine axiale, beidseits verschlossene Sackbohrung 222 erstreckt sich in dem Schieber 220, und ein Paar radialer Durchgänge 224 und 226 verbinden die Sackbohrung 222 mit dem Äußeren des Schiebers 220. Der Schaft des Kegelventilteiles 174 greift am Ende des herausstoßbaren Schiebers 220 an. Die Grundfläche des Kegelventilteiles 174 greift an einer Federauflage 230 an, welche von einer Ausstoßhülse 232 aufgenommen und zurückgehalten wird und welche durch eine Feder 234 vorgespannt ist, um an dem Kegelventilteil 174 anzugreifen. In die Ausstoßhülse 232 ist eine Welle 236 eingeschraubt, welche drehfest mit einem manuell betätigbaren Bedienungsknopf 238 verbunden ist. Die Ausstoßhülse 232 ist nicht drehbar in dem Bereich 206 größeren Durchmessers angeordnet. Dies kann durch eine hexagonale oder polygone Formgebung der Außenfläche der Ausstoßhülse 232 und dem Bereich 206 der Bohrung erreicht werden, wodurch die Ausstoßhülse 232 beim Verdrehen der Welle lediglich axial innerhalb des Bereiches 206 der Bohrung verschoben wird. Alternativ hierzu können auch Keil- und Nut-Anordnungen verwendet werden.

Die Ausführungsform gemäß Fig. 3 erfüllt drei unterschiedliche Betriebsweisen, und zwar je eine Betriebsweise für Nichtrastung, ständige Rastung und herausstoßbare Rastung.

Die Betriebsart für die Nichtrastung kann dann Anwendung finden, wenn das Steuerventil eingesetzt wird, um die Hydraulikzylinder eines Laders zu betätigen. Die Betriebsart für ständige Rastung kann Anwendung finden, wenn das Steuerventil eingesetzt wird, um einen (nicht dargestellten) zweiseitig antreibbaren Hydraulikmotor zu betätigen. Die Betriebsweise für die herausstoßbare Rastung kann dann Anwendung finden, wenn das Steuerventil eingesetzt wird, um den Hydraulikzylinder eines (nicht dargestellten) landwirtschaftlichen Arbeitsgerätes zu betätigen.

In Fig. 3 ist die Betriebsart für eine Nichtrastung dargestellt, weil das Kegelventilteil 174 zum Ventilsitz 212 beabstandet ist. Hierdurch steht der Druck des Vorratsbehälters über die Bohrung 210, dem Bereich zwischen den Erhebungen 213 und über den Kanal 165 und die Durchgänge 123 mit der Raststeuerkammer 122 in Verbindung. Wie schon bei Fig. 1 können sich hierdurch die Rastkugeln 126 in die Vertiefungen 140 des Rastkolbens 120 zurückziehen, so daß sich der Hauptsteuerschieber 116 ohne eine Rastung durch die Rastkugeln 126 bewegen läßt.

Die Betriebsart für eine ständige Rastung läßt sich durch Verdrehen des Bedienungsknopfes 238 in Richtung Uhrzeigersinn erreichen. Dabei wird die Ausstoßhülse 232 und die Federauflage 230 gemäß Fig. 3 nach links verschoben. Hierdurch wird das Kegelventilteil 174 in eine enge, dichtende Anlage mit dem Ventilsitz 212 gebracht, wodurch die Verbindung zwischen der Raststeuerkammer 122 und dem Vorratsbehälter unterbrochen wird. Der Lastdruck des Kanales 164 wird über den Durchgang 224, die Bohrung 222, den Durchgang 226, den Kanal 165 und die Durchgänge 123 der Raststeuerkammer 122 mitgeteilt, so daß der Rastkolben 120 die Rastkugeln 126 radial nach außen drückt, wo sie von der Rastvertiefung 128 oder 130 aufgenommen werden können.

Die Betriebsart für eine herausstoßbare Rastung wird dadurch erreicht, daß der Verdichtungsdruck in der Feder 234 verringert wird. Diese Betriebsart arbeitet wie folgt: Angenommen der Hauptsteuerschieber 116 befindet sich anfänglich in einer solchen Rastlage, daß der Zylinder 15 ausgefahren ist, und daß dann der Bedienungsknopf 238 aus der Position für ständige Rastung entgegen dem Uhrzeigersinn verdreht wird, um den Verdichtungsdruck der Feder 234 zu verringern.

Dann, wenn der Lastdruck in dem Kanal 164 hoch genug ist, wie es bei voll ausgefahrenem Zylinder 15 der Fall ist, übersteigt dieser Lastdruck die verminderte Kraft der Feder 234 und bewegt das Kegelventilteil 174 nach rechts. Der herausstoßbare Schieber 220 bewegt sich dem Druckabfall entsprechend ebenfalls nach rechts, weil das Kegelventilteil 174 zum Vorratsbehälter hin geöffnet ist. Der Durchgang 224 verschiebt sich weiter in die Bohrung 202 hinein, wodurch der Öldurchfluß zur Raststeuerkammer 122 unterbrochen wird. Da das Kegelventilteil 174 weiter Drucköl zum Vorratsbehälter abläßt, bewegt sich der Rastkolben 120 nach links und die Rastkugeln 126 werden freigegeben.

Wie in den vorhergehenden Ausführungsformen ist Hydraulikdruck erforderlich, damit die Rastkugeln 126 in die Vertiefungen 128 und 130 gedrängt werden. Wird die Hydraulikpumpe abgestellt, so löst sich die Rastung und der Hauptsteuerschieber 116 kehrt in seine neutrale Lage zurück. In bestimmten Anwendungsfällen ist es wünschenswert, daß die Betriebsweise der herausstoßbaren Rastung oder die des neutralen Anlaufs sich nicht von der schwimmenden Lage des Hauptsteuerschiebers 116 aus einstellen läßt. Die Ausführungsform gemäß Fig. 1 und 2 zeigt eine derartige schwimmende Rastung, bei der die Rastkugeln 125 durch die Feder 129 federvorbelastet sind.

## Patentansprüche

1. Hydraulikventil (10) mit
- einem in einer Ventilgehäusebohrung (114) bewegbar angeordneten Hauptsteuerschieber (116) zur Steuerung des Flüssigkeitsdurchflusses zwischen wenigstens einem Vorratsbehälter, wenigstens einer Hydraulikdruckquelle und wenigstens einer Hydraulikeinrichtung (15),
- einem durch den Druck in einer Raststeuerkammer (122) einstellbaren Rastmechanismus, der in einer ersten Lage für den Hauptsteuerschieber (116) mehrere zueinander beabstandete, lösbare Raststellungen definiert, in denen der Hauptsteuerschieber (116) bestimmte Steuerlagen einnimmt, und in einer zweiten Lage eine freie Bewegung des Steuerschiebers zuläßt,
- einem Raststellungssteuerventil (200) zur Steuerung des über die Raststeuerkammer (122) auf den Rastmechanismus einwirkenden Druckes, wobei das Raststellungssteuerventil (200) eine Ventilbohrung enthält, die über einen ersten Kanal (164) mit der Hydraulikdruckquelle, über einen zweiten Kanal (204) mit dem Vorratsbehälter und über einen dritten Kanal (165) mit der Raststeuerkammer (122) verbunden ist, und
- wenigstens einem in der Ventilbohrung bewegbaren Ventilteil (174) zur Steuerung des Flüssigkeitsdurchtrittes zwischen dem ersten, zweiten und dritten Kanal,
dadurch gekennzeichnet,
- daß das wenigstens eine Ventilteil (174) in einer ersten Raststeuerstellung den ersten Kanal (164) und den dritten Kanal (165), nicht jedoch den zweiten Kanal (204) und den dritten Kanal (165) miteinander verbindet und in einer zweiten rastfreien Stellung den zweiten Kanal (204) und den dritten Kanal (165) miteinander verbindet,
- daß ein Federelement (234) vorgesehen ist, das das wenigstens eine Ventilteil (174) gegen den in dem ersten und/oder dritten Kanal (164, 165) herrschenden Druck in seine Raststeuerstellung drängt, und
- daß manuell betätigbare Einstellmittel (238) zur Einstellung der Vorspannung des Federelementes (234) vorgesehen sind.

2. Hydraulikventil (10) mit
- einem in einer Ventilgehäusebohrung (114) bewegbar angeordneten Hauptsteuerschieber (116) zur Steuerung des Flüssigkeitsdurchflusses zwischen wenigstens einem Vorratsbehälter, wenigstens einer Hydraulikdruckquelle und wenigstens einer Hydraulikeinrichtung (15),
- einem durch den Druck in einer Raststeuerkammer (122) einstellbaren Rastmechanismus, der in einer ersten Lage für den Hauptsteuerschieber (116) mehrere zueinander beabstandete, lösbare Raststellungen definiert, in denen der Hauptsteuerschieber (116) bestimmte Steuerlagen einnimmt, und in einer zweiten Lage eine freie Bewegung des Steuerschiebers zuläßt,
- einer Rastventilanordnung (162) zur Steuerung des über die Raststeuerkammer (122) auf den Rastmechanismus einwirkenden Druckes, wobei die Rastventilanordnung (162) eine Ventilbohrung enthält, die über einen ersten Kanal (164) mit der Hydraulikdruckquelle, über einen zweiten Kanal (204) mit dem Vorratsbehälter und über einen dritten Kanal (165) mit der Raststeuerkammer (122) verbunden ist, und
- einem in der Ventilbohrung bewegbaren Ventilteil (174) zur Steuerung des Flüssigkeitsdurchtrittes zwischen dem ersten, zweiten und dritten Kanal,
dadurch gekennzeichnet,
- daß das eine Ventilteil (174) in einer ersten Raststeuerstellung den ersten Kanal (164) und den dritten Kanal (165), nicht jedoch den zweiten Kanal (173) und den dritten Kanal (165) miteinander verbindet und in einer zweiten rastfreien Stellung den zweiten Kanal (173) und den dritten Kanal (165) miteinander verbindet,
- daß ein Federelement (180) vorgesehen ist, das das eine Ventilteil (174) in seine Raststeuerstellung drängt, und
- daß manuell betätigbare Einstellmittel (182) vorgesehen sind, durch die das Ventilteil (174) gegen die Kraft des Federelements (180) von seinem Ventilsitz (172) abhebbar ist.

3. Hydraulikventil nach Anspruch 1, dadurch gekennzeichnet, daß ein auf den Flüssigkeitsdruck reagierendes Teil (220), das dem Druck des ersten Kanals (164) ausgesetzt ist, mit dem Raststellungssteuerventil (200) in Eingriff steht und das Raststellungssteuerventil (200) aus seiner Raststeuerstellung in die rastfreie Stellung bringt, wenn der Druck der Hydraulikquelle die Vorspannung des Federelements (234) überwindet.

4. Hydraulikventil nach einem der Ansprüche 2 bis 3, dadurch gekennzeichnet, daß der Hauptsteuerschieber (116) einen Rastbereich (118) mit wenigstens einer sich radial erstreckenden Öffnung (124) enthält, die eine Rastkugel (126) aufnimmt, welche durch wenigstens ein federvorgepanntes Teil (138) radial nach außen gedrängt wird.

5. Hydraulikventil nach Anspruch 4, dadurch gekennzeichnet, daß der Rastbereich (118) des Hauptsteuerschiebers (116) hohl ausgebildet ist und das federvorgespannte Teil (138) gleitbar in sich aufnimmt.

6. Hydraulikventil nach Anspruch 4 oder 5, dadurch gekennzeichnet, daß das federvorgespannte Teil (138) einen im wesentlichen kegelstumpfförmigen Oberflächenbereich (142) aufweist, der mit der Rastkugel (126) in Eingriff bringbar ist, um die Rastkugel (126) radial nach außen zu drängen.

7. Hydraulikventil nach einem der Ansprüche 4 bis 6, dadurch gekennzeichnet, daß der Rastbereich (118) des Hauptsteuerschiebers (116) von einem hohlen Teil (132) umgeben ist, dessen Innenfläche zueinander beabstandete Rastvertiefungen (128, 130) aufweist, die bei Erreichen einer Rastposition die Rastkugel (126) teilweise aufnehmen.

8. Hydraulikventil nach einem der Ansprüche 4 bis 7, dadurch gekennzeichnet, daß innerhalb des Rastbereiches (118) ein Rastbauteil (120) axial verschiebbar angeordnet ist, daß das Rastbauteil (120) ein Kopfteil (138) mit einer umlaufenden Ausnehmung (140) zur Aufnahme der Rastkugel (126), eine ansteigende kegelstumpfförmige Fläche (142), die mit der Rastkugel (126) in Eingriff bringbar ist und diese aus der Öffnung (124) nach außen treibt, und ein mit dem Kopfteil (138) verbundenes und dem Flüssigkeitsdruck in der Raststeuerkammer (122) ausgesetztes Kolbenteil (134) enthält, und daß das Raststellungssteuerventil (162, 200) den Flüssigkeitsdruck in der Raststeuerkammer (122) steuert, um das Rastbauteil (120) zwischen einer ersten Lage, in der die ansteigende Fläche (142) mit der Rastkugel (126) in Eingriff tritt und einer zweiten Lage, in der die Rastkugel (126) von der Ausnehmung (140) aufgenommen wird, zu steuern.

9. Hydraulikventil nach Anspruch 8, dadurch gekennzeichnet, daß entweder das Kopfteil (138) oder das Kolbenteil (134) einen hervorstehenden Schaft (136) trägt, der gleitbar in einer Bohrung des jeweils anderen Teils (134, 138) verschiebbar angeordnet ist, und daß eine Feder (144) zwischen Kopfteil (138) und Kolbenteil (134) eingespannt und so vorgespannt ist, daß sie das Kopfteil (138) mit seiner ansteigenden Fläche (142) gegen die Kugel (126) drückt.

10. Hydraulikventil nach Anspruch 8 oder 9, dadurch gekennzeichnet, daß das Rastbauteil (120) und der Hauptsteuerschieber (116) die Raststeuerkammer (122) einschließen und daß sich durch den Hauptsteuerschieber (116) ein Durchgang (123) erstreckt, der Teil einer Verbindung ist, durch die die Raststeuerkammer (122) mit dem Raststellungssteuerventil (162, 200) verbunden ist.

## Claims

1. Hydraulic valve (10) with
- a main control slide (116) arranged movably in a valve housing bore (114), for control of the throughflow of liquid between at least one storage tank, at least one hydraulic pressure source and at least one hydraulic device (15),
- a latching mechanism which is adjustable by the pressure in a latch control chamber (122) and which, in a first position for the main control slide (116), defines several spaced-apart releasable latching positions in which the main control slide (116) adopts certain control positions, and in a second position allows free movement of the control slide,
- a latch position control valve (200) for control of the pressure acting via the latch control chamber (122) on the latching mechanism, wherein the latch position control valve (200) contains a valve bore which is connected by a first channel (164) to the hydraulic pressure source, by a second channel (204) to the storage tank and by a third channel (165) to the latch control chamber (122), and
- at least one valve portion (174) movable in the valve bore for control of the throughflow of liquid between the first, second and third channels,
characterised in that
- the at least one valve portion (174) in a first latch control position connects the first channel (164) and the third channel (165), but not the second channel (204) and the third channel (165) to each other, and in a second latch-free position connects the second channel (204) and the third channel (165) to each other,
- a spring element (234) is provided which biases the at least one valve portion (174) into its latch control position against the pressure prevailing in the first and/or third channel (164, 165), and
- manually operated adjusting means (238) are provided for adjusting the initial tension of the spring element (234).

2. Hydraulic valve (10) with
- a main control slide (116) arranged movably in a valve housing bore (114), for control of the throughflow of liquid between at least one storage tank, at least one hydraulic pressure source and at least one hydraulic device (15),
- a latching mechanism which is adjustable by the pressure in a latch control chamber (122) and which, in a first position for the main control slide (116), defines several spaced-apart releasable latching positions in which the main control slide (116) adopts certain control positions, and in a second position allows free movement of the control slide,
- a latching valve arrangement (162) for control of the pressure acting via the latch control chamber (122) on the latching mechanism, wherein the latching valve arrangement (162) contains a valve bore which is connected by a first channel (164) to the hydraulic pressure source, by a second channel (204) to the storage tank and by a third channel (165) to the latch control chamber (122), and
- a valve portion (174) movable in the valve bore for control of the throughflow of liquid between the first, second and third channels,
characterised in that
- one valve portion (174) in a first latch control position connects the first channel (164) and the third channel (165), but not the second channel (173) and the third channel (165) to each other, and in a second latch-free position connects the second channel (173) and the third channel (165) to each other,
- a spring element (180) is provided which biases one valve portion (174) into its latch control position, and
- manually operated adjusting means (182) are provided whereby the valve portion (174) can be lifted off its valve seat (172) against the force of the spring element (180).

3. Hydraulic valve according to claim 1, characterized in that a portion (220) which reacts to the liquid pressure and is subjected to the pressure of the first channel (164) is engaged with the latch position control valve (200) and moves the latch position control valve (200) out of its latch control position into the latch-free position when the pressure of the hydraulic source overcomes the initial tension of the spring element (234).

4. Hydraulic valve according to either of claims 2 to 3, characterized in that the main control slide (116) contains a latching region (118) with at least one radially extending opening (124) which receives a latching ball (126) which is forced radially outwards by at least one spring-biased portion (138).

5. Hydraulic valve according to claim 4, characterized in that the latching region (118) of the main control slide (116) is of hollow construction and receives the spring-biased portion (138) slidably within it.

6. Hydraulic valve according to claim 4 or 5, characterised in that the spring-biased portion (138) comprises an essentially frustoconical surface region (142) which can be brought into engagement with the latching ball (126) in order to force the latching ball (126) radially outwards.

7. Hydraulic valve according to any of claims 4 to 6, characterized in that the latching region (118) of the main control slide (116) is surrounded by a hollow portion (132) of which the inner surface comprises spaced-apart latching recesses (128, 130) which on reaching a latching position partially receive the latching ball (126).

8. Hydraulic valve according to any of claims 4 to 7, characterised in that a latching component (120) is arranged axially slidably within the latching region, in that the latching component (120) includes a head portion (138) with a peripheral recess (140) for receiving the latching ball (126), an ascending frustoconical surface (142) which can be brought into engagement with the latching ball (126) and drives it outwards out of the opening (124), and a piston portion (134) which is connected to the head portion (138) and subjected to the liquid pressure in the latch control chamber (122), and in that the latch position control valve (162, 200) controls the liquid pressure in the latch control chamber (122) in order to control the latching component (120) between a first position in which the ascending surface (142) is engaged with the latching ball (126) and a second position in which the latching ball (126) is received by the recess (140).

9. Hydraulic valve according to claim 8, characterised in that either the head portion (138) or the piston portion (134) carries a protruding shaft (136) which is arranged slidably in a bore of the other portion (134, 138), and in that a spring (144) is mounted between head portion (138) and piston portion (134) and biased in such a way that it presses the head portion (138) by its ascending surface (142) against the ball (126).

10. Hydraulic valve according to claim 8 or 9, characterised in that the latching component (120) and the main control slide (116) enclose the latch control chamber (122) and in that through the main control slide (116) extends a passage (123) which forms part of a connection by which the latch control chamber (122) is connected to the latch position control valve (162, 200).

## Revendications

1. Distributeur hydraulique (10), avec
- un tiroir de commande principal (116), mobile dans un perçage (114) du corps de distributeur pour commander l'écoulement de liquide entre au moins un réservoir, au moins une source de pression hydraulique et au moins un appareil hydraulique (15),
- un mécanisme de crantage, qui peut être réglé par la pression régnant dans une chambre de commande de crantage (122) et qui, dans une première position, définit pour le tiroir de commande principal (116) plusieurs positions de crantage mutuellement distantes et désengageables, dans lesquelles le tiroir de commande principal (116) prend des positions de commande déterminées, et mécanisme qui, dans une seconde position, autorise un libre déplacement du tiroir de commande,
- une valve de commande de position de crantage (200) pour commander la pression agissant par l'intermédiaire de la chambre de commande de crantage (122) sur le mécanisme de crantage, la valve de commande de position de crantage (200) contenant un perçage de valve qui est relié par un premier canal (164) à la source de pression hydraulique, par un deuxième canal (204) au réservoir et par un troisième canal (165) à la chambre de commande de crantage (122), et
- au moins un obturateur (174), mobile dans le perçage de valve pour commander l'écoulement de liquide entre le premier, le deuxième et le troisième canal,
**caractérisé**
- en ce que le ou les obturateurs (174), dans une première position de commande de crantage, relient entre eux le premier canal (164) et le troisième canal (165), mais non le deuxième canal (204) et le troisième canal (165), et, dans une seconde position d'absence de crantage, relient entre eux le deuxième canal (204) et le troisième canal (165),
- en ce qu'un ressort (234) est prévu, qui pousse le ou les obturateurs (174) dans leur position de commande de crantage à l'encontre de la pression régnant dans le premier et/ou le troisième canal (164, 165),
- et en ce que des moyens de réglage (238) à actionnement manuel sont prévus pour régler la précontrainte du ressort (234).

2. Distributeur hydraulique (10), avec
- un tiroir de commande principal (116), mobile dans un perçage (114) du corps de distributeur pour commander l'écoulement de liquide entre au moins un réservoir, au moins une source de pression hydraulique et au moins un appareil hydraulique (15),
- un mécanisme de crantage, qui peut être réglé par la pression régnant dans une chambre de commande de crantage (122) et qui, dans une première position, définit pour le tiroir de commande principal (116) plusieurs positions de crantage mutuellement distantes et désengageables, dans lesquelles le tiroir de commande Principal (116) prend des positions de commande déterminées, et mécanisme qui, dans une seconde position, autorise un libre déplacement du tiroir de commande,
- un ensemble de valve de crantage (162) pour commander la pression agissant par l'intermédiaire de la chambre de commande de crantage (122) sur le mécanisme de crantage, l'ensemble de valve de crantage (162) contenant un perçage de valve qui est relié par un premier canal (164) à la source de pression hydraulique, par un deuxième canal (173) au réservoir et par un troisième canal (165) à la chambre de commande de crantage (122), et
- un obturateur (174), mobile dans le perçage de valve pour commander l'écoulement de liquide entre le premier, le deuxième et le troisième canal,
**caractérisé**
- en ce que l'obturateur (174), dans une première position de commande de crantage, relie entre eux le premier canal (164) et le troisième canal (165), mais non le deuxième canal (173) et le troisième canal (165), et, dans une seconde position d'absence de crantage, relient entre eux le deuxième canal (173) et le troisième canal (165),
- en ce qu'un ressort (180) est prévu, qui pousse l'obturateur (174) dans sa position de commande de crantage,
- et en ce que des moyens de réglage (182) à actionnement manuel sont prévus, qui permettent de décoller l'obturateur (174) de son siège (172) à l'encontre de la force du ressort (180).

3. Distributeur hydraulique selon la revendication 1, **caractérisé** en ce qu'une pièce (220), qui réagit à la pression du liquide et est exposée à la pression du premier canal (164), se trouve en engagement avec la valve de commande de Position de crantage (200) et déplace la valve de commande de position de crantage (200) de sa position de commande de crantage dans la position d'absence de crantage si la pression de la source hydraulique surmonte la précontrainte du ressort (234).

4. Distributeur hydraulique selon la revendication 2 ou 3, **caractérisé** en ce que le tiroir de commande principal (116) comporte une région de crantage (118) pourvue d'au moins une ouverture (124) s'étendant radialement et recevant une bille de crantage (126), qui est poussée radialement vers l'extérieur par au moins un élément (138) précontraint par ressort.

5. Distributeur hydraulique selon la revendication 4, **caractérisé** en ce que la région de crantage (118) du tiroir de commande principal (116) est creuse et reçoit à coulissement l'élément (138) précontraint par ressort.

6. Distributeur hydraulique selon la revendication 4 ou 5, caractérisé en ce que l'élément (138) précontraint par ressort présente une région de surface (142) essentiellement tronconique, qui peut être amenée en engagement avec la bille de crantage (126) pour pousser radialement vers l'extérieur la bille de crantage (126).

7. Distributeur hydraulique selon l'une quelconque des revendications 4 à 6, **caractérisé** en ce que la région de crantage (118) du tiroir de commande principal (116) est entourée d'une partie creuse (132) dont la face intérieure présente des renfoncements de crantage (128, 130) mutuellement distants, qui reçoivent partiellement la bille de crantage (126) à l'atteinte d'une position de crantage.

8. Distributeur hydraulique selon l'une quelconque des revendications 4 à 7, **caractérisé** en ce qu'une pièce de crantage (120) est disposée à coulissement axial à l'intérieur de la région de crantage (118), en ce que la pièce de crantage (120) comporte une partie de tête (138) pourvue d'un évidement entourant (140) pour recevoir la bille de crantage (126), une face ascendante tronconique (142) qui peut être amenée en engagement avec la bille de crantage (126) et la pousse vers l'extérieur hors de l'ouverture (124), et une partie de piston (134) assemblée à la partie de tête (138) et exposée à la pression du liquide dans la chambre de commande de crantage (122), et en ce que la valve de commande de position de crantage (162, 200) commande la pression du liquide dans la chambre de commande de crantage (122) pour asservir la pièce de crantage (120) entre une première position, dans laquelle la face ascendante (142) entre en engagement avec la bille de crantage (126), et une seconde position dans laquelle la bille de crantage (126) est reçue par l'évidement (140).

9. Distributeur hydraulique selon la revendication 8, **caractérisé** en ce que la partie de tête (138) ou bien la partie de piston (134) porte une tige (136), qui en fait saillie et est disposée à coulissement dans un perçage de l'autre partie respective (134, 138), et en ce qu'un ressort (144) est monté entre la partie de tête (138) et la partie de piston (134) et précontraint de telle sorte qu'il presse la partie de tête (138) par sa face ascendante (142) contre la bille (126).

10. Distributeur hydraulique selon la revendication 8 ou 9, **caractérisé** en ce que la pièce de crantage (120) et le tiroir de commande principal (116) renferment la chambre de commande de crantage (122), et en ce qu'un passage (123) s'étend à travers le tiroir de commande principal (116), passage qui fait partie d'une liaison par laquelle la chambre de commande de crantage (122) est reliée à la valve de commande de position de crantage (162, 200).
